(19)

Europäisches
Patentamt
European
Patent Office
Office européen
des brevets

(11) **EP 4 009 670 A1**

(12) **EUROPEAN PATENT APPLICATION**

(43) Date of publication:
**08.06.2022  Bulletin 2022/23**

(21) Application number: **20211651.3**

(22) Date of filing: **03.12.2020**

(51) International Patent Classification (IPC):
***H04W 4/029*** *(2018.01)*

(52) Cooperative Patent Classification (CPC):
**H04W 4/029**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Kido Dynamics SA
1004 Lausanne (CH)**

(72) Inventors:
• **HERNANDO DE CASTRO, Alberto
1004 Lausanne (CH)**

• **MATEO, David
1004 Lausanne (CH)**

(74) Representative: **López Camba, Emilia
SILEX IP
Poeta Joan Maragall, 9, Esc. Izq., 3º Izq.
28020 Madrid (ES)**

Remarks:
•Amended claims in accordance with Rule 137(2)
EPC.
•The references to the drawing(s) no. 1a, 1b, 2a and
2b are deemed to be deleted (Rule 56(4) EPC).

(54) **MOBILITY MEASURING AND PREDICTING METHOD**

(57)     The invention relates to a scalable and private-by-design mobility prediction process permitting to predict stays, road traffic, micro-mobility and trips segmented by mode of transportation inferred from a set of cell sites and/or towers, each comprising an antenna, distributed in a certain region and operating for a certain period of time giving support to a certain number of devices, wherein at each site, metadata of every telecommunication events concurring at its coverage area along this period of time are collected, and all the data is centralized in a single or multiple set of CDR raw metadata, and permitting for a continuous localization of a device by extrapolating any trajectory in space and time of any device, including projections into the future and projections into areas with no infrastructure, characterized in that the prediction process comprises a first step consisting in representing the events registered at CDR as vectors which components are the amplitude of probabilities of occupation for each location and time, a second step of constructing a density matrix from the vectors set obtained in the first step, a third step of diagonalizing the density matrix obtaining a basis of orthonormal vectors, assuming that basis are also the eigenvectors of an underlying pseudo-Hamiltonian, a third step of obtaining, for any incomplete vector, the coefficients of this vector in the basis of the pseudo-Hamiltonian limited in the subspace where this vector is defined, a fourth step of extrapolating these coefficients to the subspace where the vector is not defined, including future time or hypothetical networks, and a fifth step of obtaining the probabilities of occupation as the square of the obtained amplitudes for gap filling, for prediction into the future or past, or for prediction in new areas.

EP 4 009 670 A1

**Description**

**Technical Field**

The present invention relates to a location technology, and more specifically, to location method based on Call Detail Record representing any type of communication detail record or signal emitting apparatus detail record. More particularly, the present invention relates to a method of using metadata and Call Detail Record of a cell phone or the same for measuring and predicting collective human and/or animal and/or machine mobility activity and crowdedness for transportation.

**Background of the art**

Cell sites and cell towers form a dense network covering almost exhaustively the areas with relevant human activity in a region. The antennas located at the cells provide connectivity to any cell phone or communication device belonging to its network. The metadata of these connections (time and day of the telecommunication event, identification of the antenna, identification of the device/user, etc.) are recorded and collected at the Call Detail Record (CDR). A call detail record (CDR) is a computer record created by a telephone or communication device exchange. It includes the details of a phone call or communication device established through the communication exchange, including an automated record of the length of each telephone call or communication.

CDR were originally designed to track the telecommunication activity of any device for billing purposes such as disclosed in US 2016/330328. More particularly, CDRs are created by telephone exchanges' billing systems. The CDRs are saved by the transmitter exchange until the call ends. The computer networks transport CDRs to a central point. Several links are used worldwide for transporting CDRs. A call accounting program is typically used for recovering and processing CDR data. This system is also known as a business support system (BSS). In the billing system, the price of the call is estimated by using the length of the call from the CDR. It can also be used for providing customized advertisement to the users as disclosed in KR 20160091597.

However, the general procedure of recollection of the metadata is not designed to allow the cell towers to act as, for instance, gauging stations for crowdedness or human mobility. In fact, cell sites and cell towers are devices designed to provide radio signal to mobile phones such that mobile telecommunication companies have deployed a dense network of cell sites covering most of the areas with human activity. The main criterion for the installation of the towers is to ensure connectivity coverage for cell phones in those areas based on the potential activity of the users' mobile devices. Even if this criterion correlates the density of antennas with the density of population, this match is not perfect. Thus, the distribution of towers does not respond to the needs required for a network oriented in gathering information of human mobility or the like.

In addition, the data collected at the tower, the CDR, are designed to gather the information useful for billing purposes, registering every telecommunication event produced by every device. Thus, this data was not originally designed to be used as proxy of human mobility.

While CDR metadata has been used before for analyzing human mobility, no systematic or standardized procedure has been described yet proving the accuracy and reliability of the data used for those analysis. In general, the filter methods are designed in a case-by-case basis relying on the specific data set to be analyzed because of the region or the events registered, with no certainty that the same procedure properly works for a different set of cell sites and towers. In addition, the art disclosures working with CDR do not provide in general access to the original data set, and no replicability is possible for others to test the accuracy. Errors or misleading data entries may lead to wrong measures and conclusions regarding mobility patterns, and thus the need of a solid and standardized procedure is growing.

There was therefore a need for a procedure that allows to use cell sites as gauging stations for crowdedness and human mobility which overcomes the limitations mentioned before and generates a data set specially designed to properly analyze human mobility.

Document EP 3644580 shows a conventional method permitting to properly and repeatedly monitor human mobility through the use of CDR. This document also provides a method permitting to properly and repeatedly monitor human mobility through the use of CDR without any gap limiting the accuracy of any measure on crowdedness or mobility made by cell sites and towers.

Also, this document shows a method permitting to extend the use of cell sites and towers allowing for an increase of the resolution originally provided by the cell sites and towers.

In addition to human communication, it becomes more and more current that machine communicate with each other such that part of the detected activity registered at the network corresponds to machine-to-machine (M2M) communications, that is, autonomous systems connecting to the network to share data with another autonomous device. Some examples are cars, trucks, navigation devices, delivery machines, Internet of Things (IoT) etc. For a correct identification of human mobility, these elements need to be distinguished from events representing real human behavior.

Also, it becomes current to attach communication devices to animals, wild or not, to track their position for different purpose such as medical survey or migration tracking for wild animals or surveillance for pets, and the like.

However, there is still no technology permitting to distinguish between data emitted by a communication device hold by a human, such as a call phone, and M2M communication.

There is therefore a need for a method permitting to distinguish between human and non-human, such as animals or M2M, mobility.

Also, the conventional methods permit to properly and repeatedly monitor human mobility through the use of CDR, however, there is no teaching of any method able to predict the mobility and/or the behavior of population based on the measured results to enhance the future mobility and improve the accuracy of the past results.

There is therefore a need for a method permitting to predict, in time and space, the motion of the system at any time.

Finally, there is another type of information which is needed and which is needed and it corresponds to the type of mobility. Detecting the mobility of a device, and its associated bearer, it crucial as explained above. But as crucial as this is the qualitative distinction of the mobility permitting to detect the type of motion, the transport mean and so on.

There is therefore a need to develop a method permitting to classify the measured and predicted mobility information into categories so as to qualitatively identify the type of mobility.

Finally, in this period of sanitary crises, where social distancing is crucial, there is an urgent need for a method permitting to optimize the displacement of the people.

## Summary of the invention

The above problems are solved by the present invention.

A first aspect of the invention is a scalable and private-by-design mobility prediction process permitting to predict stays, road traffic, micro-mobility and trips segmented by mode of transportation inferred from a set of cell sites and/or towers, each comprising an antenna, distributed in a certain region and operating for a certain period of time giving support to a certain number of devices, wherein at each site, metadata of every telecommunication events concurring at its coverage area along this period of time are collected, and all the data is centralized in a single or multiple set of CDR raw metadata, and permitting for a continuous localization of a device by extrapolating any trajectory in space and time of any device, including projections into the future and projections into areas with no infrastructure, characterized in that the prediction process comprises a first step consisting in representing the events registered at CDR as vectors which components are the amplitude of probabilities of occupation for each location and time, a second step of constructing a density matrix from the vectors set obtained in the first step, a third step of diagonalizing the density matrix obtaining a basis of orthonormal vectors, assuming that basis are also the eigenvectors of an underlying pseudo-Hamiltonian, a third step of obtaining, for any incomplete vector, the coefficients of this vector in the basis of the pseudo-Hamiltonian limited in the subspace where this vector is defined, a fourth step of extrapolating these coefficients to the subspace where the vector is not defined, including future time or hypothetical networks, and a fifth step of obtaining the probabilities of occupation as the square of the obtained amplitudes for gap filling, for prediction into the future or past, or for prediction in new areas.

According to a preferred embodiment of the present invention, the method further comprises a projecting step comprising projecting the trajectories defined at a Voronoi grid defined by the sites and towers into the road and street grid by using virtual agents moving randomly inside the road grid mimicking movements of users in the real world, and select those which path and velocity are compatible with the events registered at the CDRs assigning a probability or likelihood to each agent to represent the pattern that generates the observed/predicted events, and aggregate all the agent's paths weighted by this likelihood at each road in the region of interest to predict road traffic.

Advantageously, the probabilities of occupation as the square of the obtained amplitudes for gap filling is obtained through the following relation

$$p_\omega(r_i, t) = \left| \sum_{m=1}^{N} a_m \psi_m(r_i, t) \right|^2. \tag{13}$$

where $a_m$, representing the overlap of state $|\omega\rangle$ with the eigenstates of the pseudo-Hamiltonian.

Advantageously, the probabilities of occupation as the square of the obtained amplitudes for prediction into the

$$p_\omega(r_i, t) = \left| \sum_{m=1}^{N} e^{-i\varepsilon_m t} a_m \psi_m(r_i, t) \right|$$

future or past is obtained through the following relation                    where $a_m$ representing the overlap of state $|\omega\rangle$ with the eigenstates of the pseudo-Hamiltonian.

Advantageously, the probabilities of occupation as the square of the obtained amplitudes for prediction in new

$$p_\omega(r_i, t) = \left| \sum_{m=1}^{N} e^{-i\varepsilon_{mk} r_i} a_m \psi_m(r_i, t) \right|^2$$

areas is obtained through the following relation:                    where $a_m$ representing the overlap of state $|\omega\rangle$ with the eigenstates of the pseudo-Hamiltonian.

Preferably, the filtering step comprises filtering devices when more than one person is using the same number or duplicated SIM cards.

According to a preferred embodiment of the present invention, the filtering step comprises filtering devices when two or more devices communicate with each other in a regular basis and systematically from the same locations.

Preferably, the filtering step comprises filtering devices when in locations covered by several sites, the device may dynamically switch its connectivity between even if no movement is related with the event.

Advantageously, the filtering step comprises filtering devices when a cell is reaching its maximum capacity, nearby cells are assigned to handle the extra events.

According to a preferred embodiment of the present invention, the method further comprise a gap filling process allowing for a continuous localization of the device by extrapolating any trajectory in space and time of any device.

## Detailed description of the invention

The present detailed description is intended to illustrate the invention in a non-limitative manner since any feature of an embodiment may be combined with any other feature of a different embodiment in an advantageous manner.

A first aspect of the invention is the distinguishing method between human and non- human mobility.

In the method of the present invention, one first assumes a set of cell sites and towers distributed in a certain region and operating for a certain period of time giving support to a certain number of devices. Each device and each antenna are univocally identified. At each site, the metadata of every telecommunication events concurring at its coverage area along this period of time are collected, and all the data is centralized in a single or multiple set of data, the CDR. At this point, the method of the invention carries out three steps:

The first step is a structuring step where CDR raw metadata is filtered so as to identify the fields of: device identification, cell site identification, date, and time. Once filtered, the data frame is generated and sorted by user, by date, and by time, preferably in this hierarchical order.

The second step is a projecting step into an occupancy grid where locations are defined and univocally identified by groups of sites or towers, where groups are allowed to be composed of a single site, and time is divided in bins of arbitrary size. For each device, events are projected into a location vs. time-bin matrix which will be called the occupancy grid in the following description.

In an occupancy grid $G$, the value of the entry $G$ *(time, location)* is proportional to the certainty that the device was present at *location* at some point during the time-bin time, given the events registered. Since the sites and times can be grouped such that a device visits more than one location during a given time-bin, the values of the occupancy grid are in principle independent of each other. To project the events into this grid, one defines the network of conditional probabilities $P = p(L \mid E)$ denoting the probability that the device visited the location $L$ given that a series of events $E$ is registered during that time bin.

Given the events and the conditional probabilities $P$, a maximum likelihood analysis provides a closed-form for the values of the occupancy grid as

$$G = \frac{1}{1 + exp\left(-\sum_{i=0}^{n} s_i\right)}$$

where
$s_i = log\ \{p(L|E_i)\}\ //log\ \{1 - p(L|E_i)\}$.

In practice, the simplest implementation of this method consists of the following steps:

1. Assign a positive number *h> 0* to the belief of a device being in a certain location if one has an event on that location.
2. Assign a negative number *m<0* to the belief of a device <u>not</u> being in a certain location if one has an event on <u>another</u> location. Typically, one wants | *m* | < | *h* | ·
3. Start a matrix *S* of size (num. of locations) x (num. of time-bins) with all the entries set to 0.
4. For each event registered, add *h* to the entry of *S* corresponding to the location of that event, and subtract *m* from every other entry at that time-bin.
5. Finally, compute the occupancy grid as G = 1 / (1 + exp(-S)).

The projection onto the occupancy grid generates a probabilistic map of a device's location and/or transition in space and time as opposed to a single inferred trajectory. Thanks to this method, the projection is known to effectively provide an *outlier filtering* of the registered events, and is thus a first layer of automated, general, filter of CDR events. Also, it provides a measure of uncertainty in the information that traditional trajectory-filtering methods do not provide: if the events registered for a certain device switch erratically between locations the resulting occupancy grid will have very low values at all locations-signifying high uncertainty-that are easy to filter out in the third stage.

The third step is a filtering step consisting in filtering devices and events for human and/or non-human mobility purposes where the method uses an analysis of the patterns observed in each user's occupancy grid to filter those that accurately represent human mobility from patterns that reflect errors, uncertainties, or patterns not related with real human mobility as machine-to-machine telecommunications, animal survey, call centers, or technology-related false positives as changes on the connection to sites even if the device has not changed its position.

The desired filters for discarding devices or events that do not contribute to the analysis of human and/or non-human mobility are defined at this stage and preferably comprise at least one of the following:

(i) Duplicated devices: if more than one person is using the same number or duplicated SIM cards, it is registered at the CDR as a single device but with overlapping events. Overlapping activity has a distinguishable imprint when projected to the occupancy grid. If that pattern is detected at the occupancy grid of a device, that device is rejected for next analysis.
(ii) False mobility positives: in locations covered by several sites, the device may dynamically switch its connectivity between even if no movement is related with the event. This effect generates a characteristic "ping-pong" pattern in the occupancy grid for adjacent cells. When this pattern is detected, probabilities are uniformly corrected.
(iii) False occupancy positives due to saturation of the network: when a cell is reaching its maximum capacity, nearby cells are assigned to handle the extra events. This effect generates a false positive in the occupancy grid. Probabilities are distributed assigning a higher probability to the saturated antenna, as potential real location of the device.
(iv) Non-Human mobility :

a. Animals: when one equip a wild animal with a survey device to monitor its displacement or find him for medical reasons, or even when a private wants to be able to monitor his pet's location.
b. Machine-to-machine: if a device is autonomously communicating with other devices in the network, systematically from the same location or in movement as for vehicles or drones (self- or human-driving) the occupancy grid takes a distinguishable pattern. If this pattern is detected, devices are classified as 'non-human'.

The last two filters deserve detailed attention as a relevant fraction of the activity registered at the network corresponds to M2M communications, that is, autonomous systems connecting to the network to share data with another autonomous device. Some examples are cars, trucks, navigation devices, delivery machines, Internet of Things (IoT) etc. For a correct identification of human mobility, these elements need to be filtered from events representing real human behavior.

Human behavior is characterized by high entropy, while it is expected that machines show low entropy in their communications. The method of the present invention comprises a filter based on an adapted entropy measure is an efficient method to filter M2M from human activity. To this aim, the present invention defines entropy H following the next algorithm:

1. One defines per each user an array $\Delta T$ containing all intervals of time between subsequent events.
2. One defines here *N* as the number of elements in $\Delta T$ for a fixed period (typically one month).
3. One defines *C = value_counts*($\Delta T$) as the array counting the frequency per each value contained in $\Delta T$.
4. One finally defines device's entropy as

$$H = \sum_i C_i \, log \, C_i$$

Every device with $H/N \, log \, N < 0.5$ and $N > 100$ in a period preferably comprising the last month of data is considered clear human behavior, while those devices not meeting with this criteria are filtered out.

Figures 1a, 1b, 2a, 2b visually show how this filter works by analyzing the mean (mu) and standard deviation (sigma) of $\Delta T$ for a set of 15 million devices. In the representation of these figures representing a histogram of mu VS sigma/mu some particular structures are clear visible. Perfectly vertical and horizontal lines correspond to devices with regular activity at fixed frequencies or devices with low activity, respectively. Both cases represent noise for an accurate collective human mobility analysis. On the other hand, the same histogram for $H$ VS $H/N \, log \, N$ show those clusters at the top half and at the left side of the graph, allow for a clean cut of those devices in those areas.

Indeed, when the filter is applied, the structures disappear from the original mu VS sigma/mu histogram, indicating that devices behaving as machines have been filtered out.

Figure 1a and 1b show a histogram for mean (mu) versus standard deviation (sigma) of time increments $\Delta T$ per device before and after filtering, respectively.

Figure 2a and 2b show a histogram of entropy $H$ versus normalized entropy $H/N \, log \, N$. Figure 2a shows a complete histogram for 15 million devices and figure 2b shows a filtered histogram for human-like devices.

If a device has been detected as IoT or M2M but presents displacements, it is not filtered from the main stream but classified as machine. These devices are in general cars, trucks or farm or wild animals with tracking devices. Thus, the procedure is able to cover not only human mobility but also non-human mobility.

The present invention provides several advantages among which an enhanced versatility because this method explicitly encodes the assumptions made about the nature of the data into the parameters of P, h and m. Therefore, it allows to formulate and test a large number of hypotheses about the mechanical working of the CDRs in particular areas of interest and compare the results by tuning $P$. Given enough data, this framework also allows to apply machine learning techniques to "train" the values of $P$. Also, it provides an improved scalability since the method is linear in time with respect to the number of registered events and linear in memory with respect to the number of locations considered. In contrast with traditional interpolation/filtering techniques, it only requires a single read of each event and does not need to store any temporary values other than the additive matrix $S$. As such, the algorithm fits into a map-reduce framework that is optimal to analyze large datasets. Finally, it is iterative. In fact, by storing the values of $S$ described above, the occupancy grid can easily accommodate new data by just updating $S$ as per point 4 in the algorithm. This also means that one can set up a feedback loop where the analysis of movement patterns using the occupancy grids of a large collection of devices can be included itself as new data points into the computation of the occupancy grid.

Another aspect of the invention is the prediction in space and in time and the gap filling process.

In this aspect of the present invention, one also first assumes a set of cell sites and towers distributed in a certain region and operating for a certain period of time giving support to a certain number of devices. Each device and each antenna are univocally identified. At each site, the metadata of every telecommunication events concurring at its coverage area along this period of time are collected, and all the data is centralized in a single or multiple set of data, the CDR.

The first step is a structuring step where CDR raw metadata is filtered so as to identify the fields of: device identification, cell site identification, date, and time. Once filtered, the data frame is generated and sorted by user, by date, and by time, preferably in this hierarchical order.

At this point where the present invention has activity genuinely related with mobility, it classifies events between displacements and stays. A displacement is any transition in space between consecutive intervals of time, while a stay is when no spatial transition took place between consecutive intervals of time.

In order to improve the description of mobility, these activity gaps require to be filled with an educated guess to have a complete picture of the mobility patterns and consider cell sites and towers as accurate devices for this purpose. A preferred embodiment of the present invention uses physical concepts to describe, reproduce and predict collective human and/or non-human behavior. Using this framework, the preferred embodiment of the present invention can use quantum physics principles where a Hilbert space is used as representation of the underlying dynamics and the device's activity is represented as a superposition of eigenstates of a pseudo-Hamiltonian. The extrapolation of this superposition is assumed as an accurate representation of the missing information in the activity gaps. In this fashion, the reconstruction is self-consistent and data-driven as no external guesses or models are introduced. The reconstruction allows to use cell sites and towers as accurate devices for human and/or non-human racking, obtaining a complete picture of mobility patterns.

More particularly, described below is a procedure to fill these gaps self-consistently with the collected data without introducing external assumptions or modelizations. As mentioned, the method is based on social physics and described using bracket notation, as many of the concepts used in its derivation are borrowed from quantum physics (Hilbert spaces, superposition of states, density matrices, etc.). In analogy to quantum mechanics, one defines a state as the full set of amplitudes of probability of finding a device at a location at a time, represented as a vector in a high-dimensional vector space. A set of the most complete states is used first to define the Hilbert space describing the underlying dynamics from the diagonalization of the density matrix. Assuming a thermal equilibrium maximizing the entropy of the system, the eigenstates and occupation numbers obtained from the diagonalization of the density matrix are used in a second step to define the pseudo-Hamiltonian which is the generator of all dynamical states, and responsible of their evolution. Furthermore, according to another embodiment of the present invention the Hamiltonian can be used not only for gap-filling, but also for predictions in time and space.

Indeed, the Hamiltonian is used in physics to predict the motion of the system at any time, including the future. The Hamiltonians of the present invention can be used to propagate the activity into the future when a value of time larger than present is used in the equations. In addition, the Hamiltonian can be extrapolated to areas with no coverage by creating a hypothetical tower infrastructure and using it as input of the procedure. In summary, the preferred embodiment presented here allows for:

- Gap-filling for intervals of time located in the past.
- Prediction for time interval located in the future.
- Prediction for areas with no infrastructure using as reference a hypothetical network.

Thus, any trajectory in space and time of any device is expressed as a superposition of the eigenstates of the pseudo-Hamiltonian. The superposition is assumed to accurately reproduce the dynamical state for all positions and time. Thus, its extrapolation to the gaps represents an accurate reconstruction of the missing information. Once the gaps are filled, one considers that the dataset is accurate enough to describe the full picture of human and non-human mobility in that region.

In more details, one first assumes a set of $N_c$ cell sites and towers distributed in a certain region at positions $r_i$ ($i = 1, ...N_c$) and operating for a certain period of time $T$ giving support to a certain number of devices $N$. Each device and each antenna are univocally identified with an integer $\alpha(\alpha = 1,...,N)$ and $i$ respectively. At each site, the metadata of every telecommunication event concurring at its coverage area along this period of time are collected, and all the data is centralized in a single or multiple set of data, the CDR.

One assumes that one can define from the data extracted from the CDR (or the occupancy matrix) the probability of finding device $\alpha$ at the area covered by site $i$ at time $t$ as $p_\alpha(r_i,t)$. This probability fulfills the normalization condition

$$\frac{1}{T}\int_T dt \sum_{i=1}^{N_c} p_\alpha(r_i, t) = 1, \qquad (1)$$

which is automatically fulfilled if

$$\sum_{i=1}^{N_c} p_\alpha(r_i, t) = 1 \qquad (2)$$

or, in other words, if the probability of finding device $\alpha$ at any location at time $t$ is equal to 1.

One then introduces the *bracket* notation and define the *state* $|r_i,t\rangle$ as a vector containing all information about location ($i$) and time ($t$). More generally, one defines $|\alpha\rangle$ as the state of the device $\alpha$ as a vector which components are the *amplitudes* of probability for each location and time, defined as

$$|\alpha\rangle = \frac{1}{T}\int_T dt \sum_{i=1}^{N_c} \phi_\alpha(r_i, t)|r_i, t\rangle, \qquad (3)$$

where

$$\phi_\alpha(r_i, t) = \sqrt{p_\alpha(r_i, t)} e^{is_\alpha(r_i, t)}. \tag{4}$$

At this point, the value of the phase $s_\alpha(r_i, t)$ is arbitrary and undefined, so in lack of a better choice one sets $s_\alpha(r_i, t) = 0$ for all $\alpha$, $i$ and $t$. It can be proved with this definition that $(\alpha|\alpha) = 1$, fulfilling the normalization condition.

Then one defines a pseudo-Hamiltonian $\mathcal{H}$ as generator of the system's dynamics. The eigenstates $|m)$ of $\mathcal{H}$ are orthonormal and define a complete Hilbert space able to describe any arbitrary dynamical state $|\alpha)$ which is taking place in the system. In terms of the location-time states one writes

$$|m) = \frac{1}{T} \int_T dt \sum_{i=1}^{N_c} \psi_m(r_i, t) |r_i, t). \tag{5}$$

The system can be then univocally characterized by the density matrix

$$\rho = \sum_{m=1}^{N} N_m |m)(m| \tag{6}$$

where $N_m$ are the occupancy of state $m$ with $\sum_{m=1}^{N} N_m = N$ (as shown below).

The density matrix elements can be obtained in the empirical non-orthogonal basis set of states constructed from the CDRs as

$$\rho_{\alpha\beta} = \langle \alpha| 1 |\beta \rangle = \frac{1}{T} \int_T dt \sum_{i=1}^{N_c} \phi_\alpha(r_i, t) \phi_\beta(r_i, t). \tag{7}$$

It can be shown that $\rho$ contains the same information in any base, meaning that this representation of $\rho$ and the one expressed in terms of the eigenstates of $\mathcal{H}$ are univocally related. Thus, since the eigenstates $|m)$ also are eigenstates of $\rho$, they can be obtained from the diagonalization of $\rho$ in its form in the empirical non-orthogonal basis.

The eigenvalues obtained are the above-mentioned occupancy, representing the number of devices in each eigenstate $|m)$. Indeed, it is a well-known property that the trace of $\rho$ is conserved in any base, thus

$$Tr\rho = \sum_{\alpha=1}^{N} \langle \alpha|\alpha \rangle = \sum_{m=1}^{N} N_m = N \tag{8}$$

Assuming that the system is in a thermal equilibrium described by the maximum entropy principle, the occupancy numbers are related with the eigenvalues $\varepsilon_m$. of the Hamiltonian as $N_m = ce^{-\varepsilon_m/k}$, where $c = N / \sum_{m=1}^{N} e^{-\varepsilon_m/k}$ and $k$ is an arbitrary thermal constant. The Hamiltonian can be reconstructed as

$$\mathcal{H}/k = - \sum_{m=1}^{N} \ln(N_m) |m)(m| + C \tag{9}$$

where $C$ is a constant that does not affect the dynamics.

Then one defines an uncomplete state $|\omega)$ defined only in a subspace of time $T'$ contented in $T$. In order to use

the eigenstates $|m\rangle$ to describe $|\omega\rangle$), one considers the lack of orthonormality of the basis in the subspace defined by $T$', writing

$$|\omega\rangle = \sum_{m=1}^{N} a_m |m\rangle \qquad (10)$$

where

$$a_m = \frac{1}{T'}\int_{T'} dt \sum_{i=1}^{N_c} \phi_\omega(r_i,t) \sum_{m'=1}^{N} (S^{-1})_{mm'} \psi_{m'}^*(r_i,t) \qquad (11)$$

being $S^{-1}$ the inverse of the overlap matrix defined as

$$S_{mm'} = \frac{1}{T'}\int_{T'} dt \sum_{i=1}^{N_c} \psi_m(r_i,t) \psi_{m'}^*(r_i,t) \qquad (12)$$

Once one obtains the set of coefficients $a_m$, representing the overlap of state $|\omega\rangle$ with the eigenstates of the pseudo-Hamiltonian, one extends the same coefficients beyond $T$' to all period $T$.

The final step to the reconstruction is to obtain the probabilities for times outside the domain of $T$' as

$$p_\omega(r_i,t) = \left| \sum_{m=1}^{N} a_m \psi_m(r_i,t) \right|^2 . \qquad (13)$$

The fitness of the reconstruction can be easily obtained from the correlation between the set of components $\phi_\omega(r_i,t)$ and $\sum_{m=1}^{N} a_m \psi_m(r_i,t)$ in $T$'.

If the period $T$ is open and into the future or past, one use the propagator matrix to project the trajectories. The propagator is defined as the imaginary exponential of the Hamiltonian as

$$\mathcal{P}(t) = e^{-i\mathcal{H}t} \qquad (14)$$

The projection into the future (or past) is obtained in terms of the coefficients as

$$p_\omega(r_i,t) = \left| \sum_{m=1}^{N} e^{-i\epsilon_m t} a_m \psi_m(r_i,t) \right|^2 \qquad (15)$$

Thanks to this, one can now make use of a Wick rotation between space and time to project into a space beyond the area of the data. To this aim, one needs first to distribute a set of locations in this area to simulate the position of cells for $r_i$ Empirically, the towers typically follow the density of population and traffic, thus a distribution of locations with more concentration in dense urban areas or along roads works perfectly as proxy. One write in this case:

$$p_\omega(r_i, t) = \left| \sum_{m=1}^{N} e^{-i\varepsilon_m k\, r_i} a_m \psi_m(r_i, t) \right|^2 \qquad (16)$$

Where the constant k accounts for space-time units.

In summary, the gap filling/reconstructions method comprises the following steps:

1. Represent the events registered at CDR as vectors which component are the amplitude of probabilities of occupation for each location and time, as in Eq. (3).
2. Construct the density matrix from the most complete vectors set, as in Eq. (7).
3. Diagonalize the density matrix obtaining a basis of orthonormal vectors, assuming that basis are also the eigenvectors of the underlying pseudo-Hamiltonian.
4. For any incomplete vector, in time or space, including future time or hypothetical locations, obtain the coefficients of this vector in the basis of the pseudo-Hamiltonian limited in the subspace where this vector is defined, as in Eq. (11).
5. Extrapolate these coefficients to the subspace where the vector is not defined.
6. Obtain the probabilities of occupation as the square of the obtained amplitudes according to Eq. (13) for gap filling, Eq. (15) for prediction into the future or past, or Eq. (16) for prediction in new areas.

Another aspect of the invention is the classification of mobility and mode of transportation

In this method of the present invention, one still first assumes a set of cell sites and towers distributed in a certain region and operating for a certain period of time giving support to a certain number of devices. Each device and each antenna are univocally identified. At each site, the metadata of every telecommunication events concurring at its coverage area along this period of time are collected, and all the data is centralized in a single or multiple set of data, the CDR.

The first step is a structuring step where CDR raw metadata is filtered so as to identify the fields of: device identification, cell site identification, date, and time. Once filtered, the data frame is generated and sorted by user, by date, and by time, preferably in this hierarchical order.

A natural mathematical property of using a pseudo-Hamiltonian inspired in quantum physics is the indistinguishability of its constituents. Indeed, the density matrix represents the evolution of N particles (or users in this case) for an arbitrary value of N, and each of its eigenvectors represents the collective mode of m particles represented by the vector |m⟩. This property implies than any reconstruction or prediction generated by the pseudo-Hamiltonian represents the activity of indistinguishable users, and thus protecting its identity. This making the method private-by-design.

At this point of the procedure, the method comprises a step of classifying sequences of events (real or predicted) into four categories:

1. Trajectory. A sequence of events is added within the same trajectory if the device has traveled preferably at least 5 km in the interval of the last hour. This filter ensures that this movement has been carried out with an engine propelled vehicle.
2. Micro-trajectory. A sequence of events is added as a micro-trajectory if an offset has occurred, but shorter than the trajectory condition used in the previous group.
3. Macro-trajectory. A macro-trajectory is a sequence of trajectories and micro-trajectories that have taken place in a time interval between them that is shorter than the duration of its components. This definition allows to include long-distance trips that have had stops or multimodal trips with road interchangers.
4. Stay. A stay is a sequence of events where no displacement has occurred according to the previous definitions.

The relevance of this distinction is:

1. Trajectories are used to predict explicit road traffic, train, or plane, as well as any type of light and heavy traffic, for example.
2. Micro-trajectories are used to identify micro-mobility, which correspond to displacements in lightweight vehicles as bicycles or by walking, for example.
3. Macro-trajectories are used to reproduce the definition of trip used worldwide in mobility surveys, for example, which implies the mental concept of initial and final destination, independently of the necessary stops taken during the execution of the displacement.
4. Stays are relevant to identify the purpose of the trip (commuting, tourism, supply chain, etc.) depending on the infrastructure located at the area of stay.

In summary, the above method provides a deep insight on the collective mobility adapted to the needs of the industry.

For example, it allows to provide origin-destination matrices, widely used in urban planning and transportation, by selecting the start and end point of trips, microtrips and macrotrips.

It also allows to measure or predict road traffic in certain areas for traffic management thereby permitting to adapt the traffic flows. It also allows mobility companies as taxi fleets or other vehicles to manage the optimal location of their fleet according to predicted demand on potential trips thereby permitting to optimize and reduce the "empty" mobility of their fleets.

It also allows to provide statistics on tourism occupation by measuring the amount of people with stays at a certain place and certain time at night, as to determine if they spent the night in that location It also allows for event management to count how many people attended a sport event, concert, demonstration, etc. and how the leave the area. It also helps shop owner in retail to measure how many people stop at a commercial area (generating stays or microtrips and thus becoming potential clients) and how many drive along without stopping (generating trips or macrotrips and thus not becoming potential clients). It also helps to valuate an area for real state according to the activity detected there and the proportion of visits and trips, as for malls, parking, residential buildings, etc. It also allows to measure the real population of a certain area, counting residents, commuters, tourists and floating population as no official records exist in public administration to this purpose.

All these application are currently crucial because they permit to optimize the human flows in different situations in real time and optimize their mobility and therefore also the social distancing efforts to comply with sanitary requirements for example.

As explained above, cell sites are distributed in space with the goal of exhaustively covering all the surface of a region with potential human and/or non-human activity to provide signal to any device at any point. Because of the technological limitations of the cell's band width, more antennas are needed in populated areas to guarantee total coverage to all potential activity. This generates a distribution for the location of the cells that empirically mimics the density of population, with a denser grid in urban areas and a scattered one in rural areas.

Assuming that the closest cell is the one providing a better signal for the device, the surface of the region can be divided by Voronoi cells following the locations of the sites. In this fashion, one can consider that a device is located at any point inside the Voronoi cell when an event is registered at that site. Thus, a sequence of events defines a path in the Voronoi grid, cell by cell.

Even if this representation has some advantages for measuring human and/or non-human mobility over other technologies, it is still unsatisfactory for many applications as the location or exact path of the device along the roads and streets of the region is not defined, with the corresponding loosing of accuracy.

Another embodiment of the invention relates to a method to accurately project the trajectories defined at the Voronoi grid defined by the sites and towers to the road and street grid. One makes use of virtual agents moving randomly inside the road grid mimicking the movements of users in the real world, and select those which path and velocity are compatible with the events registered (or reconstructed) at the CDRs. One assigns a probability or likelihood to each agent to represent the pattern that generates the observed events and aggregate all the agent's paths weighted by this likelihood to be used as a statistical measure of the empirical human and/or non-human mobility of the region.

The procedure can be applied one-to-one (one agent to fit the events of one device) or all-to-all (the same number of agents as users to fit the aggregated set of events). The all-to-all procedure is applied when the anonymity and privacy of the users is required. The outcome of the procedure is a set of trajectories or paths at the level of roads and streets with attributes of time, path length and velocity.

According to this method, one first assumes a set of $N_c$ cell sites and towers distributed in a certain region at positions $r_i (i = 1, ...N_c)$ and operating for a certain period of time T giving support to a certain number of devices N. Each device and each antenna are univocally identified (as much as technically possible) with an integer $\alpha$ ($\alpha = 1, ...,N$) and i respectively. At each site, the metadata of every telecommunication event concurring at its coverage area along this period of time are collected, and all the data is centralized in a single or multiple set of data, the CDR. For each CDR labelled with j, one generates a pair $\left( i_j^\alpha, t_j^\alpha \right)$ locating the event at site i at time $t_j$ for user $\alpha$.

One defines now the road graph as the network which nodes are crossings or junctions and vertex are the roads and streets of the region. One defines $N_v > N$ *virtual agents* or *random walkers* that will move from node to node following the rules defined by the grid (first neighbors, directions, velocities, etc.) The procedure follows:

1) Every walker x starts at a different random node of the road network, at a random initial time $t_0^x$ inside the interval T.

2) In a series of consecutive steps k = 1, 2, 3 ..., the walkers move to a random first neighboring node at each step, for a random maximum number of steps $k_m^x$. A velocity $v_k^x$ is assigned random ly at each step, as the mean velocity of the walker along that vertex.

One defines a trajectory as the path followed by the walker along the graph in the series of steps. The final time of the path is obtained from the initial time $t_0^x$ plus the time required to travel along each vertex in each step $\Delta t_k^x = v_k^x / d_k^x$, where $d_k^x$ is the distance travelled at that same step along the vertex, as $t_f^x = t_0^x + \sum_{k=1}^{k_m^x} \Delta t_k^x$.

The average velocity of the full path for walker x is then $\langle v \rangle = \sum_{k=1}^{k_m^x} v_k^x t_k^x / T$, where the time per step is considered.

One now assigns a likelihood for each walker as the probability that its path generates a sequence of events as those observed at the CDRs. For the one-to-one case (N = 1), where one has a sequence in time of n events $\{(i_j^\alpha, t_j^\alpha)\}_{j=1}^n$ for user $\alpha$, one applies the equation:

$$L_x = \prod_{j=1}^{n} P\left(r_{i_j^\alpha} \middle| r_x\left(t_j^\alpha\right)\right) \qquad (1)$$

where $P(r_i | r_x)$ is the probability of generating an event in antenna i from a location $r_x$ and $r_x(t)$ is the position of walker x at time t. For the sake of simplicity, one considers for P a power law with quadratic decay in the distance for the intensity of the signal, which is normalized considering all the neighboring antennas as:

$$P(r_i | r) = \frac{|r_i - r|^{-2}}{\sum_{i'=1}^{N_c} |r_{i'} - r|^{-2}} \qquad (2)$$

For the case of all-to-all (N > 1), 0one extends eq. (1) to all antennas and all events as:

$$L_x = \prod_{\alpha=1}^{N} \prod_{j=1}^{n} P\left(r_{i_j^\alpha} \middle| r_x\left(t_j^\alpha\right)\right) \qquad (3)$$

for all walkers x.

Next, one assigns to each walker a weight according to his likelihood $L_x$. For a statistical representation of the real trajectories, one uses this weight to select the N fittest walkers, or N' > N of the fittest walkers normalizing their contribution as $w_x = L_x / \sum_{x'}^{N'} L_{x'}$. In this fashion, w represents an estimation of the fraction of people-note that $w_x$ does not need to be 1 anymore-that has followed the path defined by walker x. However, since walkers are not fitted to individuals in the all-to-all case, it is important to notice that the meaningful statistical measures are those made at the level of aggregation of N walkers, as for instance the number of walkers crossing a preselected road, or the number of walkers with certain location for origin or destination of their trajectories.

In this way, the final output in a set of paths along the road graph with attributes of time, distance, and velocity, with a real number representing the relative weight of the contribution of each path.

According to another embodiment of the present invention, it is possible that each agent is given a set of probabilities to correspond to each possible "transport mode":

- light vehicle
- heavy vehicle
- tram
- train
- airplane

- unknown

These probabilities are the result of a Bayes inference based on the location and timestamps of each agent, the kinematic compatibility of their associated speed, and, if available, official statistical data of the relative traffic volume of each mode measured in reference points.

Initially, each agent is classified as 'unknown' transportation mode. The probability of remaining in this mode is reduced as the agent moves along reference points and their surroundings. When an agent is registered in certain reference areas it can assign an almost-100% probability of being in a certain mode (e.g. an area containing only train or tram tracks and no roads) but in general trips are given non-trivial sets of probabilities.

The procedure works as follows: Each reference area $c$ has associated a set of probabilities $p_m^c$ for each possible transport mode $m$ according to the infrastructure presented there (roads, railroads, bus stops, airports, etc.). In a first step, each agent starts with a prior set of probabilities $P_m$. Along the trajectory of the agent, its associated probability is updated being proportional to the product of the prior and the area probabilities of all the areas in which the agent visited. Lastly this associated probability is scaled by a factor $S_m$(steps) that depends on the kinematics of each agent's step: distance travelled and time spent at each steps. When available, $p_m^c$ , $P_m$, and $S_m$ are parameters fitted using official statistics of relative passenger density in each trips (i.e. amount of passengers traveling between given points by car, heavy vehicle, train, or plane).

At the end of its trip, the agent has cumulated certain probabilities per each mode of transportation. In general, a trip will contribute towards statistical aggregates of all modes where it has a > 0 probability. With this method, around 85% of trips are associated a known transportation mode. This permits to classify by transportation mode one the simulation by agents is run. For example, if one measures that agents are going very fast and straight line, it's likely to be a plane. Otherwise, it can be light or heavy, train or bus, etc. In case that an explicit mode is necessary, the distribution of probability collapses to the mode with higher probability. For multimodal trips (trips where more than one mode was used) the collapse is done by segments.

At the end of the entire procedure one obtains accurate collective aggregated trajectories projected to the infrastructure and classified by transportation mode. This procedure is universal as it can be used for any network at any country, with no constraints in the geographical area. Thanks to the reconstruction described here and the simulation by agents on the road network, this procedure can also be applied in areas with low density of towers as far one disposes of the road network of the area, which is the case for almost all the planet.

As it is followed in the description of the method, the computational effort of every step is linear with the number of users, towers and agents used in the simulation (typically in the same order of the users). This property allows for a favourable scalability with high performance, making its implementation practical and realistic.

The three methods explained here, i.e., the filter sequences of events by human or non-human, the gap filling and prediction of new events in time and space, and the classification events by stays or displacements, and classify displacements by transportation mode, are independent per se but could work in any order or combination, but the most optimal solution is to apply the three of them firstly 1, then 2 and finally 3.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

**Claims**

1. Scalable and private-by-design mobility prediction process permitting to predict stays, road traffic, micro-mobility and trips segmented by mode of transportation inferred from a set of cell sites and/or towers, each comprising an antenna, distributed in a certain region and operating for a certain period of time giving support to a certain number of devices, wherein at each site, metadata of every telecommunication events concurring at its coverage area along this period of time are collected, and all the data is centralized in a single or multiple set of CDR raw metadata, and permitting for a continuous localization of a device by extrapolating any trajectory in space and time of any device, including projections into the future and projections into areas with no infrastructure, **characterized in that** the prediction process comprises

- a first step consisting in representing the events registered at CDR as vectors which components are the amplitude of probabilities of occupation for each location and time,
- a second step of constructing a density matrix from the vectors set obtained in the first step,
- a third step of diagonalizing the density matrix obtaining a basis of orthonormal vectors, assuming that basis are also the eigenvectors of an underlying pseudo-Hamiltonian,
- a third step of obtaining, for any incomplete vector, the coefficients of this vector in the basis of the pseudo-Hamiltonian limited in the subspace where this vector is defined,
- a fourth step of extrapolating these coefficients to the subspace where the vector is not defined, including future time or hypothetical networks, and
- a fifth step of obtaining the probabilities of occupation as the square of the obtained amplitudes for gap filling, for prediction into the future or past, or for prediction in new areas.

2. Method according to claim 1, **characterized in that** it further comprises a projecting step comprising projecting the trajectories defined at a Voronoi grid defined by the sites and towers into the road and street grid by using virtual agents moving randomly inside the road grid mimicking movements of users in the real world, and select those which path and velocity are compatible with the events registered at the CDRs assigning a probability or likelihood to each agent to represent the pattern that generates the observed/predicted events, and aggregate all the agent's paths weighted by this likelihood at each road in the region of interest to predict road traffic.

3. Method according to any one of claims 1 to 2, **characterized in that** it the probabilities of occupation as the square of the obtained amplitudes for gap filling is obtained through the following relation:

$$p_\omega(r_i, t) = \left| \sum_{m=1}^{N} a_m \psi_m(r_i, t) \right|^2 .$$

where $p_\omega(r_i,t)$ is the probability of finding user $|\omega)$ at antenna $i$ and time $t$ (where the gap is observed), $\psi_m$ is the m-th eigenstate of the pseudo-Hamiltonian constructed from diagonalizing the user's states correlation matrix and $a_m$, represents the overlap of user's state $|\omega)$ with this eigenstate.

4. Method according to any one of claims 1 to 2, **characterized in that** it the probabilities of occupation as the square of the obtained amplitudes for prediction into the future or past is obtained through the following relation:

$$p_\omega(r_i, t) = \left| \sum_{m=1}^{N} e^{-i\varepsilon_m t} a_m \psi_m(r_i, t) \right|^2$$

where $p_\omega(r_i,t)$ is the probability of finding user $|\omega)$ at antenna $i$ and time $t$ (a time value located in the past or the future), $\psi_m$ is the m-th eigenstate of the pseudo-Hamiltonian constructed from diagonalizing the user's states correlation matrix, $a_m$ represents the overlap of user's state $|\omega)$ with this eigenstate, and $\varepsilon_m$ is the eigenvalue of the m-th eigenstate.

5. Method according to any one of claims 1 to 2, **characterized in that** it the probabilities of occupation as the square of the obtained amplitudes for prediction in new areas is obtained through the following relation:

$$p_\omega(r_i, t) = \left| \sum_{m=1}^{N} e^{-i\varepsilon_m k \, r_i} a_m \psi_m(r_i, t) \right|^2$$

where $p_\omega(r_i,t)$ is the probability of finding user $|\omega)$ at antenna $i$ and time $t$ (for an antenna located in an area outside the available data), $\psi_m$ is the m-th eigenstate of the pseudo-Hamiltonian constructed from diagonalizing the user's states correlation matrix, $a_m$ represents the overlap of user's state $|\omega)$ with this eigenstate, $\varepsilon_m$ is the eigenvalue of the m-th eigenstate, and $k$ is a constant that accounts for space-time units.

6. Method according to any one of claims 1 to 5, **characterized in that** the filtering step comprises filtering devices when more than one person is using the same number or duplicated SIM cards.

7. Method according to any one of claims 1 to 6, **characterized in that** the filtering step comprises filtering devices when two or more devices communicate with each other in a regular basis and systematically from the same locations.

8. Method according to any one of claims 1 to 7, **characterized in that** the filtering step comprises filtering devices when in locations covered by several sites, the device may dynamically switch its connectivity between even if no movement is related with the event. 8

9. Method according to any one of claims 1 to 9, **characterized in that** the filtering step comprises filtering devices when a cell is reaching its maximum capacity, nearby cells are assigned to handle the extra events.

10. Method according to any one of claims 1 to 9, **characterized in that** it further comprise a gap filling process allowing for a continuous localization of the device by extrapolating any trajectory in space and time of any device.

**Amended claims in accordance with Rule 137(2) EPC.**

1. Scalable and private-by-design mobility prediction process permitting to predict stays, road traffic, micro-mobility and trips segmented by mode of transportation inferred from a set of cell sites and/or towers, each comprising an antenna, distributed in a certain region and operating for a certain period of time giving support to a certain number of devices, wherein at each site, metadata of every telecommunication events concurring at its coverage area along this period of time are collected, and all the data is centralized in a single or multiple set of CDR raw metadata, and permitting for a continuous localization of a device by extrapolating any trajectory in space and time of any device, including projections into the future and projections into areas with no infrastructure, **characterized in that** the prediction process comprises

   - a first step consisting in representing the events registered at CDR as vectors which components are the amplitude of probabilities of occupation for each location and time,
   - a second step of constructing a density matrix from the vectors set obtained in the first step,
   - a third step of diagonalizing the density matrix obtaining a basis of orthonormal vectors, assuming that basis are also the eigenvectors of an underlying pseudo-Hamiltonian,
   - a third step of obtaining, for any incomplete vector, the coefficients of this vector in the basis of the pseudo-Hamiltonian limited in the subspace where this vector is defined,
   - a fourth step of extrapolating these coefficients to the subspace where the vector is not defined, including future time, and
   - a fifth step of obtaining the probabilities of occupation as the square of the obtained amplitudes for gap filling, for prediction into the future or past, or for prediction in new areas.

2. Method according to claim 1, **characterized in that** it further comprises a projecting step comprising projecting the trajectories defined at a Voronoi grid defined by the sites and towers into the road and street grid by using virtual agents moving randomly inside the road grid mimicking movements of users in the real world, and select those which path and velocity are compatible with the events registered at the CDRs assigning a probability or likelihood to each agent to represent the pattern that generates the observed/predicted events, and aggregate all the agent's paths weighted by this likelihood at each road in the region of interest to predict road traffic.

3. Method according to any one of claims 1 to 2, **characterized in that** it the probabilities of occupation as the square of the obtained amplitudes for gap filling is obtained through the following relation:

$$p_\omega(r_i, t) = \left| \sum_{m=1}^{N} a_m \psi_m(r_i, t) \right|^2 ,$$

where $p_\omega(\eta, t)$ is the probability of finding user $|\omega\rangle$ at antenna i and time $t$ (where the gap is observed), $\psi_m$ is the m-th eigenstate of the pseudo-Hamiltonian constructed from diagonalizing the user's states correlation matrix and $\alpha_m$ represents the overlap of user's state $|\omega\rangle$ with this eigenstate.

4. Method according to any one of claims 1 to 2, **characterized in that** it the probabilities of occupation as the square of the obtained amplitudes for prediction into the future or past is obtained through the following relation:

$$p_\omega(\eta, t) = \left| \sum_{m=1}^{N} e^{-i\varepsilon_m t} \alpha_m \psi_m(\eta, t) \right|^2$$

where $p_\omega(\eta, t)$ is the probability of finding user $|\omega\rangle$ at antenna i and time $t$ (a time value located in the past or the future), $\psi_m$ is the m-th eigenstate of the pseudo-Hamiltonian constructed from diagonalizing the user's states correlation matrix, $\alpha_m$ represents the overlap of user's state $|\omega\rangle$ with this eigenstate, and $\varepsilon_m$ is the eigenvalue of the m-th eigenstate.

5. Method according to any one of claims 1 to 2, **characterized in that** it the probabilities of occupation as the square of the obtained amplitudes for prediction in new areas is obtained through the following relation:

$$p_\omega(\eta, t) = \left| \sum_{m=1}^{N} e^{-i\varepsilon_m k \eta} \alpha_m \psi_m(\eta, t) \right|^2$$

where $p_\omega(\eta, t)$ is the probability of finding user $|\omega\rangle$ at antenna i and time $t$ (for an antenna located in an area outside the available data), $\psi_m$ is the m-th eigenstate of the pseudo-Hamiltonian constructed from diagonalizing the user's states correlation matrix, $\alpha_m$ represents the overlap of user's state $|\omega\rangle$ with this eigenstate, $\varepsilon_m$ is the eigenvalue of the m-th eigenstate, and k is a constant that accounts for space-time units.

6. Method according to any one of claims 1 to 5, **characterized in that** the filtering step comprises filtering devices when more than one person is using the same number or duplicated SIM cards.

7. Method according to any one of claims 1 to 6, **characterized in that** the filtering step comprises filtering devices when two or more devices communicate with each other in a regular basis and systematically from the same locations.

8. Method according to any one of claims 1 to 7, **characterized in that** the filtering step comprises filtering devices when in locations covered by several sites, the device may dynamically switch its connectivity between even if no movement is related with the event. 8

9. Method according to any one of claims 1 to 9, **characterized in that** the filtering step comprises filtering devices when a cell is reaching its maximum capacity, nearby cells are assigned to handle the extra events.

10. Method according to any one of claims 1 to 9, **characterized in that** it further comprise a gap filling process allowing for a continuous localization of the device by extrapolating any trajectory in space and time of any device.

Europäisches
Patentamt

European
Patent Office

Office européen
des brevets

**EUROPEAN SEARCH REPORT**

Application Number

EP 20 21 1651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 3 644 580 A1 (KIDO DYNAMICS SA [CH]) 29 April 2020 (2020-04-29) <br> * abstract * <br> * paragraphs [0001] - [0021] * <br> * paragraphs [0034] - [0054] * <br> ----- | 1-10 | INV. <br> H04W4/029 |
| A | US 2012/115475 A1 (MIYAKE MOTOHARU [US] ET AL) 10 May 2012 (2012-05-10) <br> * abstract * <br> * paragraphs [0012] - [0015] * <br> * paragraphs [0125] - [0149] * <br> * page 10 * <br> ----- | 1-10 | |
| | | | **TECHNICAL FIELDS SEARCHED (IPC)** <br><br> H04W |

The present search report has been drawn up for all claims

| Place of search | Date of completion of the search | Examiner |
|---|---|---|
| Munich | 23 August 2021 | Pandolfi, Alessandra |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 21 1651

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2021

| Patent document cited in search report | | Publication date | Patent family member(s) | | Publication date |
|---|---|---|---|---|---|
| EP 3644580 | A1 | 29-04-2020 | EP | 3644580 A1 | 29-04-2020 |
| | | | WO | 2020083713 A1 | 30-04-2020 |
| US 2012115475 | A1 | 10-05-2012 | JP | 5871566 B2 | 01-03-2016 |
| | | | JP | 2012141953 A | 26-07-2012 |
| | | | US | 2012115475 A1 | 10-05-2012 |
| | | | US | 2012115476 A1 | 10-05-2012 |
| | | | US | 2012115505 A1 | 10-05-2012 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016330328 A
- KR 20160091597
- EP 3644580 A